(19) Europäisches Patentamt

European Patent Office

Office européen des brevets

(11)  **EP 4 144 704 B1**

(12)  **FASCICULE DE BREVET EUROPEEN**

(45) Date de publication et mention
de la délivrance du brevet:
**26.11.2025  Bulletin 2025/48**

(21) Numéro de dépôt: **22192823.7**

(22) Date de dépôt: **30.08.2022**

(51) Classification Internationale des Brevets (IPC):
*C02F 1/467* (2023.01)      *C02F 1/66* (2023.01)
*E04H 4/12* (2006.01)      *C02F 103/42* (2006.01)

(52) Classification Coopérative des Brevets (CPC):
**C02F 1/66; C02F 1/4674; E04H 4/1209;
E04H 4/1245; E04H 4/1281;** C02F 2103/42;
C02F 2209/006; C02F 2209/02; C02F 2209/04;
C02F 2209/06

(54)  **METHODE ET DISPOSITIF DE TRAITEMENT DE L' EAU POUR UNE PISCINE**

VERFAHREN UND VORRICHTUNG ZUR AUFBEREITUNG VON WASSER FÜR EIN SCHWIMMBAD

METHOD AND DEVICE FOR TREATING WATER FOR A SWIMMING POOL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **01.09.2021  FR 2109158**

(43) Date de publication de la demande:
**08.03.2023  Bulletin 2023/10**

(73) Titulaire: **Yneom
83330 Le Beausset (FR)**

(72) Inventeur: **COTTREAU, Yann
83330 LE BEAUSSET (FR)**

(74) Mandataire: **Barbot, Willy
Simodoro-ip
82, rue Sylvabelle
13006 Marseille (FR)**

(56) Documents cités:
**WO-A1-2014/064302      CN-U- 211 111 414
US-A1- 2016 299 096      US-A1- 2020 369 534**

## Description

### Domaine technique

L'invention concerne un procédé de pilotage d'un dispositif de traitement de l'eau de piscine et un dispositif de traitement de l'eau pour une piscine. Un tel dispositif est typiquement disposé dans un circuit de filtration dans lequel circule l'eau contenue dans la piscine.

### Technique antérieure

De manière connue, l'eau d'une piscine doit être traitée selon trois aspects : (1) une filtration afin de retirer tout corps étranger de l'eau, (2) un ajustement du pH afin de s'approcher d'un pH de consigne et, enfin, (3) une désinfection afin de supprimer tout potentiel pathogène.

Il est connu de réaliser ces trois aspects (filtration, pH et désinfection) séparément.

1) Le temps de filtration est déterminé en fonction d'une température mesurée de l'eau.
2) Le pH est ajusté avec l'ajout de correcteur pH, dont la quantité est déterminée en fonction de l'écart entre un pH mesuré de l'eau et un pH de consigne.
3) La quantité de produit désinfectant à ajouter à l'eau est déterminée en fonction de celle déjà présente dans l'eau, typiquement par la détermination du potentiel redox de l'eau quand le produit désinfectant est à base de chlore ou de brome.

Or, comme il sera décrit plus avant, les trois paramètres d'entrée de l'eau (température, pH et potentiel redox) sont interdépendants.

Aussi, chaque correction de l'un de ces trois paramètres va modifier les deux autres, de sorte que chaque correction va fausser la précédente.

En conséquence, il est nécessaire de développer de nouveaux dispositifs à même de traiter l'eau d'une piscine de façon fiable, économique et rapide.

Le document US2020369534 A1 décrit un exemple d'un procédé de pilotage connu.

### Résumé de l'invention

L'inventeur a maintenant développé une solution qui, en occupant un minimum d'espace puisqu'elle utilise un unique boîtier de mesure et d'injection, permet de gérer de façon fiable, rapide et économique la filtration, le pH et la désinfection de l'eau de piscine. Cette solution permet ainsi une gestion optimale du traitement de l'eau.

L'invention a pour objet un procédé de pilotage d'un dispositif de traitement de l'eau pour une piscine, tel que défini dans la revendication 1, comprenant :

A) au moins un circuit de filtration équipé d'au moins un filtre ; et
B) au moins une pompe de filtration apte à réaliser une circulation de l'eau dans ledit au moins un circuit de filtration au travers dudit au moins un filtre ;
C) un unique boîtier de mesure et de correction hydrauliquement connecté, de préférence en série, sur ledit au moins un circuit de filtration, lequel boîtier de mesure comprend :

i. des moyens de mesure des paramètres de l'eau ; et
ii. des moyens d'injection dans le circuit de filtration de produits correcteurs ; et

D) une unité de commande interfacée avec le boîtier, apte à déterminer un planning de filtration, à commander la pompe de filtration selon le planning de filtration, à déterminer les quantités et plannings d'injection des produits correcteurs en fonction des paramètres de l'eau mesurés au sein du boîtier et à commander les moyens d'injection selon les quantités et plannings déterminés ;

Lequel procédé comprend les étapes suivantes :

- mesure des paramètres de l'eau au moyen des capteurs de mesure au sein du boîtier de mesure ;
- détermination des quantités et plannings d'injection des produits correcteurs,
- commande des moyens d'injection selon les quantités et plannings déterminés par l'unité de commande ; et
- réitération de toutes les étapes selon une première période, préférentiellement horaire ; et

Lequel procédé comprend encore les étapes de :

- détermination d'un temps théorique de filtration TTF (en heures) sur une deuxième période, préférentiellement journalière, selon la formule
TTF = max (T°mesurée - 12, T°mesurée/2), où T°mesurée est la température mesurée de l'eau (en degré Celsius),
- construction d'un planning de filtration en répartissant le temps théorique de filtration sur la deuxième période, et
- pilotage de la pompe de filtration (4) selon le planning de filtration.

Le procédé comprend encore les étapes de :

- détermination d'un pH corrigé en fonction d'un pH mesuré et de la température mesurée selon la formule :

pHcorrigé = pHmesuré - (pHmesuré - 7) * (T°mesurée - 25) * PH_TEMP

où pHcorrigé est le pH corrigé de l'eau, pHmesuré est le pH mesuré pour l'eau, T°mesurée est la température mesurée pour l'eau et PH_TEMP est une constante de conversion dont la valeur est égale à 0,03 ; et

- détermination d'un potentiel redox corrigé en fonction d'un potentiel redox mesuré et du pH corrigé selon la formule :

Redox corrigé = Redox mesuré - (ORP_PH_A * pHCorrigé + ORP_PH_B)

où Redox corrigé est le potentiel redox corrigé de l'eau, Redox mesuré est le potentiel redox mesuré pour l'eau, pH corrigé est tel que décrit précédemment, ORP_PH_A une constante dont la valeur est égale à -76, et ORP_PH_B est une constante dont la valeur est égale à 532 ;

- détermination d'une quantité de correcteur de pH à injecter en fonction de l'écart entre le pH corrigé et un pH de consigne ;

- construction d'un planning de correction pH en répartissant la quantité de correcteur de pH déterminée sur la deuxième période ;

- injection du correcteur de pH selon le planning de correction pH ;

- détermination d'une quantité de désinfectant à injecter en fonction de la différence entre le potentiel redox corrigé et un potentiel redox de consigne;

- construction d'un planning de désinfection en répartissant la quantité de désinfectant déterminée sur la deuxième période ; et

- injection du désinfectant selon le planning de désinfection ;

où le planning de correction pH et le planning de désinfection sont disjoints avec un délai de sécurité entre deux injections de correcteurs différents, de préférence entre une injection de correcteur de pH et une injection de désinfectant, lequel délai de sécurité est préférentiellement d'au moins 10 mn ; et

où le planning de correction pH et le planning de désinfection sont superposés avec le planning de filtration et où un délai de dilution est introduit entre une mise en route de la pompe de filtration et une injection, lequel délai de dilution est préférentiellement d'au moins 10 mn.

Avantageusement, le procédé exploite encore un indicateur de fréquentation compris entre 0 et 100% et un indicateur météo compris entre 0 et 100%, déterminant un facteur de traitement égal à la moyenne de l'indicateur de fréquentation et de l'indicateur météo, la quantité de désinfectant initialement déterminée étant remplacée par la quantité de désinfectant corrigée selon la formule :

$$Dcorrigée = Dinitiale * (1 + FT)$$

où Dcorrigée correspond à la quantité corrigée de désinfectant, Dinitiale correspond à la quantité de désinfectant initialement déterminée et FT le facteur de traitement déterminé selon la formule :

$$TRF = TTF + 4 * FT$$

avec TTF correspondant au temps théorique de filtration et TRF au temps réel de filtration (avec FT compris entre 0 (0%) et 1,0 (100%)).

Dans un deuxième aspect, l'invention a pour objet un dispositif de traitement de l'eau pour une piscine comprenant :

A) au moins un circuit de filtration équipé d'au moins un filtre ; et
B) au moins une pompe de filtration apte à réaliser une circulation de l'eau dans ledit au moins un circuit de filtration au travers dudit au moins un filtre ;
où le dispositif comprend en outre :
C) un unique boîtier de mesure et de correction hydrauliquement connecté, de préférence en série, sur ledit au moins un circuit de filtration, lequel boîtier de mesure comprend :

i. des moyens de mesure des paramètres de l'eau ; et
ii. des moyens d'injection dans le circuit de filtration de produits correcteurs ; et

D) une unité de commande interfacée avec le boîtier, apte à déterminer un planning de filtration, à commander la pompe de filtration selon le planning de filtration, à déterminer les quantités et plannings d'injection des produits correcteurs en fonction des paramètres de l'eau mesurés au sein du boîtier et à commander les moyens d'injection selon les quantités et plannings déterminés, laquelle unité de commande est apte à implémenter le procédé de pilotage défini dans la revendication 1.

Selon l'invention, les paramètres de l'eau comprennent la température de l'eau, le pH de l'eau et le potentiel redox de l'eau. La mesure de la pression de l'eau et/ou de la turbidité de l'eau peuvent toutefois être effectuées, mais pas au sein du boîtier de mesure et de correction.

Les moyens de mesure visent donc des capteurs à même de mesurer ces paramètres et comprennent donc au moins un capteur de température, un capteur de pH et un capteur de potentiel redox et préférentiellement aussi un capteur de pression et un capteur de turbidité.

Les produits correcteurs comprennent au moins un correcteur de pH, un agent acidifiant et/ou un agent alcalinisant en fonction du pH initial de l'eau, et au moins un désinfectant.

En ce qui concerne les moyens d'injection, ils comprennent :

- une première pompe doseuse apte à doser et à injecter ledit au moins un correcteur de pH, et
- une deuxième pompe doseuse apte à doser et à injecter le désinfectant ou un moyen de production apte à produire et à injecter le désinfectant.

Dans un troisième aspect, l'invention vise une piscine comprenant un dispositif tel que décrit précédemment.

**Brève description des dessins**

L'invention sera mieux comprise à la lecture de la description qui suit, faite uniquement à titre d'exemple, et en référence aux figures en annexe dans lesquelles :

[Fig. 1] montre une vue de situation du dispositif dans son environnement,
[Fig. 2] montre une vue d'ensemble du dispositif,
[Fig. 3] montre un schéma fonctionnel du dispositif.

**Description des modes de réalisation**

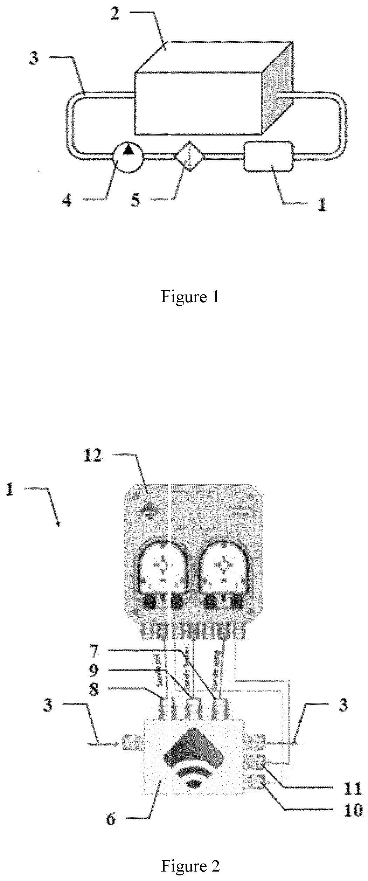

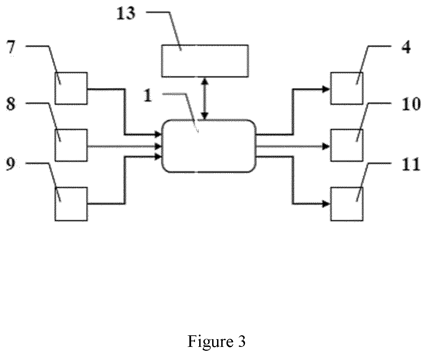

En référence aux figures 1-3, l'invention concerne un dispositif 1 de traitement de l'eau pour une piscine 2. De manière classique, cette piscine 2 comprend au moins un circuit de filtration 3. Cet au moins un circuit de filtration 3 prélève l'eau dans la piscine 2 et la rejette, après filtration, dans cette même piscine 2. Aussi et avec le temps, toute l'eau contenue dans la piscine 2 circulera dans le circuit de filtration. Le circuit de filtration 3 est équipé d'au moins un filtre 5 et d'au moins une pompe de filtration 4. La pompe de filtration 4 permet ainsi de réaliser une circulation de l'eau contenue dans la piscine 2 dans ledit au moins un circuit de filtration 3 au travers du filtre 5, ceci afin de débarrasser l'eau des impuretés qu'elle peut contenir.

Selon une caractéristique, le dispositif 1 de traitement comprend un unique boîtier 6 de mesure et de correction et une unité de commande 12. Le boîtier 6 est hydrauliquement connecté en série sur ledit au moins un circuit de filtration 3. Ainsi, le boîtier 6 peut voir l'eau lors de sa circulation dans le circuit de filtration 3, cette eau traversant le boîtier 6.

Le boîtier 6 comprend des moyens de mesure 7-9 des paramètres de l'eau et des moyens d'injection 10, 11 dans le circuit de filtration 3 de produits correcteurs.

L'unité de commande 12 est interfacée avec le boîtier 6. Elle est apte à déterminer une durée de filtration, à construire un planning de filtration et à commander la filtration, via la pompe de filtration 4, selon le planning de filtration. Elle est encore apte à déterminer les quantités et plannings d'injection des produits correcteurs en fonction des paramètres de l'eau. Elle est encore apte à commander les moyens d'injection 10, 11 selon les quantités et plannings déterminés.

Un tel dispositif 1, en ce qu'il comporte un unique boîtier 6, est simple à installer. Il ne nécessite qu'un unique branchement hydraulique sur ledit au moins un circuit de filtration 3.

Un tel dispositif 1, en ce qu'il voit simultanément tous les paramètres de l'eau nécessaires et qu'il commande les trois aspects du traitement de l'eau : filtration, pH et désinfection, est apte à optimiser, au moyen de mesures plus précises et de calculs plus justes, tant les quantités de produits correcteurs consommés que, au moyen de traitements automatisés et asservis, les durées de filtration et ainsi l'énergie électrique consommée.

Selon une autre caractéristique, les paramètres de l'eau comprennent la température de l'eau, le pH de l'eau et le redox de l'eau. Les moyens de mesure 7-9 sont adaptés pour mesurer les paramètres de l'eau et comprennent un capteur de température 7, un capteur de pH 8 et un capteur de potentiel redox 9.

Selon une autre caractéristique, les produits correcteurs comprennent au moins un correcteur de pH et un désinfectant. Aussi, les moyens d'injection 10, 11 comprennent un moyen d'injection dudit au moins un correcteur de pH, telle une première pompe doseuse 10 apte à doser et à injecter ledit au moins un correcteur de pH.

Selon un mode de réalisation, la correction de pH peut être effectuée au moyen de deux produits : un pour augmenter le pH et un autre pour le diminuer. En fonction du pH mesuré, le dispositif utilise l'un ou l'autre des produits correcteurs. Une unique pompe doseuse 10 peut être utilisée pour réaliser les injections du produit correspondant.

Maintenant et avantageusement, la correction du pH est effectuée au moyen d'un seul produit (pour diminuer ou augmenter le pH). En effet, et en fonction de la localisation d'une piscine et de son environnement, un seul sens d'évolution du pH est possible.

Le désinfectant peut être choisi parmi plusieurs produits. Il peut s'agir de chlore, de brome, d'oxygène actif ou de tout autre désinfectant équivalent. Plusieurs options sont ici possibles, notamment pour le chlore.

Dans le cadre du dispositif selon l'invention, on utilisera de préférence le chlore comme désinfectant.

Il est possible d'avoir le produit préalablement préparé, et à l'instar du correcteur de pH de délivrer le désinfectant au moyen d'un pompe doseuse 11. Alternativement, il est possible de produire le désinfectant à la demande. Aussi, les moyens d'injection 10, 11 comprennent encore un moyen d'injection du désinfectant, telle une deuxième pompe doseuse 11 apte à doser et à injecter le désinfectant ou un moyen de production 11 apte à produire et à injecter le désinfectant. Un exemple d'un moyen de production est un électrolyseur. L'activation de l'électrolyseur, par une commande électrique, permet de produire du chlore à la demande. Ce dernier est ensuite injecté, au niveau du boîtier 6, dans le circuit de filtration 3.

Avantageusement, les moyens d'injection (10,11) comprennent alors :

i) une première pompe doseuse (10) apte à doser et à injecter ledit au moins un correcteur de pH ; et

ii) un électrolyseur (11) apte à produire du chlore à partir du sel dissout dans l'eau de la piscine et à l'injecter au niveau du boîtier 6, dans le circuit de filtration.

L'invention concerne encore un procédé pilotant un tel dispositif 1. Selon une caractéristique, il comprend les étapes suivantes. Au cours d'une première étape, le procédé, au moyen du dispositif 1, mesure les paramètres de l'eau au moyen des capteurs 7-9 afin de connaître l'état de l'eau. En fonction de cet état, le procédé, au moyen du dispositif 1, détermine une quantité de produit correcteur de pH et une quantité de désinfectant.

Ensuite, pour chacun des produits correcteurs, le procédé détermine de plus un planning d'injection, de manière à étaler l'introduction de produit correcteur sur une durée longue afin d'en assurer une bonne dilution.

Un planning, dans la présente, s'entend d'un diagramme en fonction du temps pouvant prendre 2 états : un état inactif, où aucune opération (pompage, injection) n'est réalisée et un état actif où l'opération est réalisée.

Au cours d'une étape ultérieure, le procédé commande, au moyen du dispositif 1, chacun des moyens d'injection 10, 11 selon sa quantité et son planning propre, précédemment déterminés.

A l'issue des trois étapes précédentes, le procédé réitère toutes les étapes. Ceci est répété avantageusement périodiquement selon une première période donnée. Ladite première période est préférentiellement d'une heure.

Afin de bien assurer une dilution d'un produit correcteur, il est préférable de n'injecter un produit correcteur que lorsque la filtration, et donc la circulation d'eau dans le circuit de filtration 3, est active.

Le procédé détermine la durée de filtration et sa répartition dans le temps, sous la forme d'un planning de filtration qu'il construit. Selon une autre caractéristique, le procédé comprend pour cela encore les étapes suivantes. Il détermine un temps théorique de filtration sur une deuxième période. Cette deuxième période est préférentiellement d'une journée, à savoir 24 heures. Le temps théorique de filtration est déterminé selon la formule (de contrôle commande) :

$$\text{TTF} = \max\left(\text{T°mesurée}/2, \text{T°mesurée} - 12\right)$$

où TTF est le temps théorique de filtration par deuxième période obtenu en heures par cette formule en partant de la température mesurée de l'eau en degré Celsius (T°mesurée) au moyen du capteur de température 7.

A partir de ce temps théorique de filtration, le procédé construit un planning de filtration en répartissant le temps théorique de filtration sur la deuxième période. La répartition est préférentiellement régulière. Elle peut cependant obéir à d'autres contraintes : filtration préférentiellement le jour, ou préférentiellement la nuit, pour des raisons de nuisance sonore et/ou de coût de l'électricité, durée de pompage minimum pour assurer un fonctionnement raisonnable de la pompe de filtration 4 et limiter les arrêts et démarrages, etc. Le planning de filtration ainsi déterminé est ensuite appliqué au pilotage de la pompe de filtration 4.

Les quantités de produits correcteurs dépendent des paramètres de l'eau. Il convient donc de mesurer ces paramètres préalablement à toute détermination des quantités de produit correcteur. Comme il a été signalé en préambule, les paramètres de l'eau sont interdépendants. Aussi, il convient de corriger leur valeur en fonction des mesures des autres paramètres.

Ici, l'invention, qui considère au moins trois paramètres de l'eau (filtration, pH et désinfection), apporte un réel avantage en ce qu'elle permet d'affiner les mesures et donc d'optimiser les quantités de produits correcteurs, la durée de filtration, le planning de filtration et les plannings de correction.

Selon une autre caractéristique, le procédé comprend encore les étapes suivantes. Selon une première étape, il est déterminé un pH corrigé en fonction du pH mesuré, au moyen du capteur de pH 8, et de la température mesurée, au moyen du capteur de température 7, selon la formule :

pHcorrigé = pHmesuré - (pHmesuré - 7) * (T°mesurée - 25) * PH_TEMP

avec pHcorrigé correspond au pH corrigé, pHmesuré correspond au pH mesuré, T°mesurée correspond à la température mesurée de l'eau et PH_TEMP correspond à une constante de conversion, laquelle est préférentiellement égale à 0,03.

Selon une autre étape, il est encore déterminé un potentiel redox corrigé de l'eau en fonction du potentiel redox mesuré au moyen du capteur de potentiel redox 9 et en fonction du pHcorrigé, selon la formule :

Redox corrigé = Redox mesuré - (ORP_PH_A * pHCorrigé + ORP_PH_B)

où Redox corrigé correspond au potentiel redox corrigé, Redox mesuré correspond au potentiel redox mesuré au moyen du capteur de potentiel redox 9, pH corrigé correspond au pH corrigé, ORP_PH_A correspond à une constante, laquelle est préférentiellement égale à -76 et ORP_PH_B correspond à une autre constante, laquelle autre constante est préférentiellement égale à 532. Ainsi la correction appliquée est une fonction affine du pH corrigé, précédemment déterminé.

Selon une autre étape, la quantité de correcteur de pH à injecter est déterminée de manière connue, selon une fonction, sensiblement proportionnelle, de la différence entre le pH corrigé et un pH de consigne. Le pH de consigne est avantageusement indiqué par l'utilisateur de la piscine 2, par exemple au moyen d'une interface homme machine 13 du dispositif 1, ou est une valeur par défaut.

Selon une autre étape, à partir de la quantité précédente, il est construit un planning de correction pH en répartissant la quantité de correcteur de pH déterminée sur la deuxième période.

Selon une autre étape, le procédé, au moyen du moyen d'injection 10, pilote l'injection du correcteur de pH selon le planning de correction pH.

Selon une autre étape, la quantité de désinfectant à injecter est déterminée de manière connue, selon une fonction, sensiblement proportionnelle, de la différence entre un potentiel redox corrigé et un potentiel redox de consigne, divisé par le potentiel redox de consigne. Le potentiel redox de consigne est avantageusement indiqué par l'utilisateur de la piscine 2, par exemple au moyen d'une interface homme machine 13 du dispositif 1 ou, est une valeur par défaut.

Selon une autre étape, à partir de la quantité précédente, il est construit un planning de correction redox ou planning de désinfection en répartissant la quantité de désinfectant déterminée sur la deuxième période.

Selon une autre étape, le procédé, le moyen d'injection 11 pilote l'injection du désinfectant selon le planning de désinfection.

Le ou les produits correcteurs de pH et le produit désinfectant ne sont généralement pas compatibles chimiquement. Aussi, ils ne doivent pas être injectés simultanément. En conséquence, le planning de correction pH et le planning de désinfection sont disjoints. Il est entendu par disjoints ici qu'un des plannings d'injection (correction pH ou désinfection) ne peut être à l'état actif (à l'état injection) si l'autre planning l'est aussi. Autrement dit, les états actifs d'un planning d'injection sont disjoints des états actifs de l'autre planning d'injection. Cette contrainte est prise en compte lors de la construction des plannings d'injection.

Afin d'éviter tout risque de mélange des produits correcteurs, il est de plus assuré, lors de la construction des plannings, un délai de sécurité entre deux injections de produits correcteurs différents. Aussi, si un des plannings d'injection est actif et devient inactif, l'autre planning d'injection ne peut passer à l'état actif qu' après l'écoulement d'au moins un délai de sécurité. Ce délai de sécurité est préférentiellement d'au moins 10 mn.

Afin de bien mélanger les produits correcteurs avec l'eau de la piscine 2, il est préférable de ne réaliser une injection dans le circuit de filtration 3 que lorsque qu'une circulation d'eau est présente, et donc lorsque la pompe de filtration est en marche (planning de filtration est à l'état actif).

Aussi, selon une autre caractéristique, une injection de l'un ou de l'autre des produits correcteurs n'est réalisée que lorsque la filtration est active. Autrement dit, le planning de correction pH et le planning de désinfection sont nécessairement superposés avec le planning de filtration. Il est entendu par superposés ici qu'un des plannings d'injection (correction pH ou désinfection) ne peut être à l'état actif, soit à l'état injection, que si le planning de filtration est aussi actif.

Afin d'assurer qu'une circulation d'eau est effectivement présente dans le boîtier 6 lors d'une injection, un délai de dilution est avantageusement introduit, lors de la construction des plannings d'injection, entre une mise en route de la pompe de filtration 4 et une injection. Ce délai de dilution est préférentiellement d'au moins 10 mn.

L'avantage de l'invention qui propose un dispositif 1 intégré, permet encore avantageusement d'utiliser d'autres paramètres pour renseigner le dispositif 1 et lui permettre d'optimiser encore son fonctionnement.

Selon une autre caractéristique, le procédé exploite encore un indicateur de fréquentation compris entre 0 et 100% et un indicateur météo compris entre 0 et 100%.

L'indicateur de fréquentation reflète le taux d'utilisation de la piscine 2 et donc la quantité de traitement nécessaire. Plus la fréquentation augmente et se rapproche d'une fréquentation maximale de 100% et plus le traitement de l'eau doit s'intensifier. L'indicateur de fréquentation est par exemple renseigné par un utilisateur au moyen d'une interface homme machine 13 offerte par le dispositif 1. Selon un autre mode de réalisation, alternatif ou complémentaire, l'indicateur de fréquentation est déterminé automatiquement par le dispositif 1, par exemple au moyen d'un portier apte à détecter le passage d'un baigneur en entrée et en sortie, afin de déterminer le nombre de baigneurs présents en fonction du temps.

L'indicateur météo reflète la météo à venir. L'occurrence de fortes chaleurs, ou de précipitations augmente la pollution de l'eau. Aussi, les prévisions météo peuvent être utilisées pour anticiper une adaptation du traitement de l'eau. L'indicateur météo est automatiquement déterminé par le dispositif 1 en fonction des prévisions météo, obtenues par Internet. L'indicateur météo augmente, vers le maximum de 100 % à mesure de la présence d'épisodes chauds ou de précipitations pondérés par leur proximité temporelle.

A partir de ces deux indicateurs, le procédé détermine un facteur de traitement égal à la moyenne de l'indicateur de fréquentation et de l'indicateur météo. Ensuite le procédé utilise ce facteur de traitement pour intensifier ou réduire le traitement de l'eau.

Pour cela, dans les étapes précédemment décrites, la quantité de désinfectant initialement déterminée est remplacée par une quantité de désinfectant corrigée selon la formule :

$$\text{Dcorrigée} = \text{Dinitiale} * (1 + \text{FT})$$

où Dcorrigée correspond à la quantité de désinfectant corrigée qui va être effectivement injectée, Dinitiale correspond à la quantité de désinfectant initialement déterminée, par la méthode précédemment décrite, et FT le facteur de traitement.

De manière analogue, le temps théorique de filtration est remplacé par un temps réel de filtration déterminé selon la formule

$$TRF = TTF + 4 * FT$$

où TRF est le temps réel de filtration, TTF est le temps théorique de filtration et FT est le facteur de traitement.

Selon une autre caractéristique, l'unité de commande 12 est la partie du dispositif 1 apte à implémenter le procédé tel que décrit précédemment.

L'invention concerne encore une piscine 2 équipé d'un dispositif 1 tel que décrit précédemment.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles. La portée de l'invention est déterminée par les revendications ci-jointes.

**Liste des signes de référence**

1 : dispositif,
2 : piscine,
3 : circuit de filtration,
4 : pompe de filtration,
5 : filtre,
6 : boîtier de mesure et de correction,
7 : capteur de température,
8 : capteur de pH,
9 : capteur de potentiel redox,
10 : moyen d'injection correcteur de pH,
11 : moyen d'injection désinfectant,
12 : unité de commande,
13 : interface homme machine.

**Revendications**

1. Un procédé de pilotage d'un dispositif (1) de traitement de l'eau pour une piscine (2) comprenant :

A) au moins un circuit de filtration (3) équipé d'au moins un filtre (5) ;
B) au moins une pompe de filtration (4) apte à réaliser une circulation de l'eau dans ledit au moins un circuit de filtration (3) au travers dudit au moins un filtre (5),
C) un unique boîtier (6) de mesure et de correction hydrauliquement connecté, de préférence en série, sur ledit au moins un circuit de filtration (3), lequel boîtier (6) comprend :

i) des moyens de mesure (7-9) des paramètres de l'eau ; et
ii) des moyens d'injection (10, 11) dans le circuit de filtration (3) de produits correcteurs ; et

D) une unité de commande (12) interfacée avec le boîtier (6), apte à déterminer un planning de filtration, à commander la pompe de filtration (4) selon le planning de filtration, à déterminer les quantités et plannings d'injection des produits correcteurs en fonction des paramètres de l'eau mesurés au sein du boîtier (6) et à commander les moyens d'injection (10, 11) selon les quantités et plannings déterminés ;
Lequel procédé comprend les étapes suivantes :

- mesure des paramètres de l'eau comprenant la température de l'eau, le pH de l'eau et le potentiel redox de l'eau au moyen des capteurs de mesure (7-9) au sein du boîtier (6) comprenant un capteur de température (7), un capteur de pH (8) et un capteur de potentiel redox (9),
- détermination des quantités et plannings d'injection des produits correcteurs,
- commande des moyens d'injection (10, 11) selon les quantités et plannings déterminés,
- réitération de toutes les étapes selon une première période, préférentiellement horaire,

**caractérisé en ce que le procédé** comprend en outre les étapes de :

- détermination d'un temps théorique de filtration TTF en heures sur une deuxième période, préférentiellement journalière, selon la formule

$$TTF = \max(T°\text{mesurée} - 12, T°\text{mesurée}/2),$$

où T°mesurée est la température mesurée de l'eau en degré Celsius,
- détermination d'un pH corrigé en fonction d'un pH mesuré et de la température mesurée selon la formule :

pHcorrigé = pHmesuré - (pHmesuré - 7) * (T°mesurée - 25) * PH_TEMP

où pHcorrigé est le pH corrigé de l'eau, pHmesuré est le pH mesuré de l'eau, T°mesurée est la température mesurée de l'eau en degré Celsius et PH_TEMP est une constante de conversion dont la valeur est égale à 0,03,

   - détermination d'une quantité de correcteur de pH à injecter en fonction de l'écart entre le pH corrigé et un pH de consigne,
   - détermination d'un potentiel redox corrigé en fonction d'un potentiel redox mesuré et du pH corrigé selon la formule :

   Redox corrigé = Redox mesuré - (ORP_PH_A * pHcorrigé + ORP_PH_B) où Redox corrigé est le potentiel redox corrigé, Redox mesuré est le potentiel redox mesuré de l'eau, pHcorrigé est le pH corrigé de l'eau, ORP_PH_A est une constante dont la valeur est égale à -76 et ORP_PH_B est une autre constante dont la valeur est égale à 532,

      - détermination d'une quantité de désinfectant à injecter en fonction de la différence entre le potentiel redox corrigé et un potentiel redox de consigne,
      - construction d'un planning de filtration en répartissant le temps théorique de filtration sur la deuxième période,
      - construction d'un planning de correction pH en répartissant la quantité de correcteur de pH déterminée sur la deuxième période,
      - construction d'un planning de désinfection en répartissant la quantité de désinfectant déterminée sur la deuxième période,
      - pilotage de la pompe de filtration (4) selon le planning de filtration,
      - injection du correcteur de pH selon le planning de correction pH, et
      - injection du désinfectant selon le planning de désinfection.

2. Le procédé selon la revendication précédente, où le planning de correction pH et le planning de désinfection sont disjoints avec un délai de sécurité entre deux injections de correcteurs différents, lequel délai de sécurité est préférentiellement d'au moins 10 mn.

3. Le procédé selon l'une quelconque des revendications précédentes, où :

   a) les produits correcteurs comprennent au moins un correcteur de pH, qui peut être un agent acidifiant et/ou un agent alcalinisant, et un désinfectant ; et
   b) les moyens d'injection (10, 11) comprennent :

      i) une première pompe doseuse (10) apte à doser et à injecter ledit au moins un correcteur de pH ; et
      ii) une deuxième pompe doseuse (11) apte à doser et à injecter le désinfectant ou un moyen de production (11) apte à produire et à injecter le désinfectant.

4. Le procédé selon la revendication précédente, où les moyens d'injection (10,11) comprennent :

   i. une première pompe doseuse (10) apte à doser et à injecter ledit au moins un correcteur de pH ; et
   ii. un électrolyseur (11) apte à produire du chlore à partir du sel dissout dans l'eau de la piscine et à l'injecter au niveau du boîtier (6), dans le circuit de filtration.

5. Un dispositif (1) de traitement de l'eau pour une piscine (2) comprenant :

A) au moins un circuit de filtration (3) équipé d'au moins un filtre (5) ;
B) au moins une pompe de filtration (4) apte à réaliser une circulation de l'eau dans ledit au moins un circuit de filtration (3) au travers dudit au moins un filtre (5),
C) un unique boîtier (6) de mesure et de correction hydrauliquement connecté, de préférence en série, sur ledit au moins un circuit de filtration (3), lequel boîtier (6) comprend i) des moyens de mesure (7-9) des paramètres de l'eau comprenant un capteur de température (7), un capteur de pH (8) et un capteur de potentiel redox (9); et ii) des moyens d'injection (10, 11) dans le circuit de filtration (3) de produits correcteurs et
D) une unité de commande (12) interfacée avec le boîtier (6), apte à déterminer un planning de filtration, à commander la pompe de filtration (4) selon le planning de filtration, à déterminer les quantités et plannings d'injection des produits correcteurs en fonction des paramètres de l'eau mesurés au sein du boîtier (6) et à commander les moyens d'injection (10, 11) selon les quantités et plannings déterminés, *caractérisé en ce que* l'unité de commande (12) est apte à implémenter le procédé selon l'une quelconque des revendications précédentes.

6. Une piscine (2) *caractérisée en ce qu'elle* comprend un dispositif (1) selon la revendication précédente.

**Patentansprüche**

1. Verfahren zur Steuerung einer Vorrichtung (1) zur Behandlung von Wasser für ein Schwimmbad (2), umfassend:

A) mindestens einen Filtrationskreislauf (3) mit mindestens einem Filter (5),
B) mindestens eine Filtrationspumpe (4), geeignet, eine Wasserzirkulation durch den genannten mindestens einen Filter (5) im genannten Filtrationskreislauf (3) zu erzeugen,
C) ein einziges Mess- und Korrekturgehäuse (6), hydraulisch, vorzugsweise in Reihe, an den genannten mindestens einen Filtrationskreislauf (3) angeschlossen, wobei dieses Gehäuse (6) enthält:

i) Messmittel (7-9) für Wasserparameter, und
ii) Mittel zum Einführen (10, 11) von Korrekturmitteln in den Filtrationskreislauf (3), und

D) eine Steuereinheit (12), an das Gehäuse (6) angeschlossen und in der Lage, einen Filtrationsplan aufzustellen, die Filtrationspumpe (4) entsprechend dem Filtrationsplan zu steuern, Mengen und Einführzeitpunkte der Korrekturmittel in Abhängigkeit von den im Gehäuse (6) gemessenen Wasserparametern zu planen und die Einführmittel (10, 11) den bestimmten Mengen und der Einführplanung entsprechend zu steuern, wobei das genannte Verfahren die folgenden Schritte umfasst:

- Messung der Wasserparameter, umfassend die Wassertemperatur, den pH-Wert des Wassers und das Redoxpotential des Wassers, mit Hilfe der Messsensoren (7-9) im Gehäuse (6), die einen Temperatursensor (7), einen pH-Sensor (8) und einen Redoxpotentialsensor (9) umfassen,
- Bestimmung der Mengen der Korrekturmittel und der Einführzeitpunkte,
- Steuerung der Einführmittel (10, 11) entsprechend den bestimmten Mengen und der Einführplanung,
- Wiederholung aller Schritte mit einer ersten Periode, vorzugsweise stündlich,

**dadurch gekennzeichnet, dass das Verfahren** außerdem die folgenden Schritte umfasst:

- Bestimmung einer theoretischen Filtrationsdauer TTF in Stunden in einer zweiten Periode, vorzugsweise täglich, nach der Formel

$$TTF = \max(T°gemessen-12, T°gemessen/2),$$

in der T°gemessen die gemessene Wassertemperatur in °C ist,
- Bestimmung eines korrigierten pH-Wertes aus einem gemessenen pH-Wert und der gemessenen Temperatur nach der Formel pHkorrigiert = pHgemessen - (pHgemessen - 7) × (T°gemessen - 25) x PH_TEMP in der pHkorrigiert der korrigierte pH-Wert des Wassers ist, pHgemessen der gemessene pH-Wert des Wassers in °C und PH_TEMP eine Umrechnungskonstante, deren Wert gleich 0,03 ist,

- Bestimmung der einzuführenden Menge eines pH-Wert-Korrekturmittels in Abhängigkeit vom Abstand zwischen dem korrigierten pH-Wert und einem vorgegebenen pH-Wert,
- Bestimmung eines korrigierten Redoxpotentials aus einem gemessenen Redoxpotential und dem korrigierten pH-Wert nach der Formel Redox korrigiert = Redox gemessen - (ORP_PH_A × pHkorrigiert + ORP_PH_B) in der Redox korrigiert das korrigierte Redoxpotential ist, Redox gemessen das gemessene Redoxpotential des Wassers, pHkorrigiert der korrigierte pH-Wert des Wassers, ORP_PH_A eine Konstante, deren Wert gleich -76 ist und ORP_PH_B eine andere Konstante, deren Wert gleich 532 ist,

- Bestimmung der Menge einzuführenden Desinfektionsmittels in Abhängigkeit von der Differenz zwischen dem korrigierten Redoxpotential und einem vorgegebenen Redoxpotential,
- Erstellung eines Filtrationsplans durch Verteilung der theoretischen Filtrationszeit auf die zweite Periode,
- Erstellung eines pH-Wert-Korrekturplans durch Verteilung der bestimmten pH-Wert-Korrekturmittelmenge auf die zweite Periode,
- Erstellung eines Desinfektionsplans durch Verteilung der bestimmten Desinfektionsmittelmenge auf die zweite Periode,
- Steuerung der Filtrationspumpe (4) entsprechend dem Filtrationsplan,
- Zusetzen des pH-Wert-Korrekturmittels entsprechend dem pH-Wert-Korrekturplan, und
- Zusetzen des Desinfektionsmittels entsprechend dem Desinfektionsplan.

2. Verfahren nach dem vorangehenden Patentanspruch, in dem der pH-Wert-Korrekturplan und der Desinfektionsplan um einen Zeitraum zwischen dem Einführen zweier verschiedener Korrekturmittel versetzt sind, wobei dieser Sicherheitszeitraum vorzugsweise mindestens 10 min beträgt.

3. Verfahren nach irgendeinem der vorangehenden Patentansprüche, in dem

a) die Korrekturmittel mindestens ein pH-Wert-Korrekturmittel, bei dem es sich um ein Säuerungsmittel und/oder um ein Alkalisierungsmittel handeln kann, und ein Desinfektionsmittel umfassen und
b) die Einführmittel (10, 11) umfassen:

i) eine erste Dosierpumpe (10), geeignet, das genannte mindestens eine pH-Wert-Korrekturmittel zu dosieren und zuzusetzen, und
ii) eine zweite Dosierpumpe (11), geeignet, das genannte mindestens eine Desinfektionsmittel zu dosieren und zuzusetzen, oder ein Erzeugungsmittel (11), geeignet, das Desinfektionsmittel zu erzeugen und zuzusetzen.

4. Verfahren nach dem vorangehenden Patentanspruch, in dem die Einführmittel (10, 11) umfassen:

i) eine erste Dosierpumpe (10), geeignet, das genannte mindestens eine pH-Wert-Korrekturmittel zu dosieren und zuzusetzen, und
ii) einen Elektrolyseur (11), geeignet, aus dem im Wasser des Schwimmbades gelösten Salz Chlor zu erzeugen und es im Bereich des Gehäuses (6) in den Filtrationskreislauf einzuführen.

5. Vorrichtung (1) zur Behandlung von Wasser für ein Schwimmbad (2), umfassend:

A) mindestens einen Filtrationskreislauf (3) mit mindestens einem Filter (5),
B) mindestens eine Filtrationspumpe (4), geeignet, eine Wasserzirkulation durch den genannten mindestens einen Filter (5) im genannten Filtrationskreislauf (3) zu erzeugen,
C) ein einziges Mess- und Korrekturgehäuse (6), hydraulisch, vorzugsweise in Reihe, an den genannten mindestens einen Filtrationskreislauf (3) angeschlossen, wobei dieses Gehäuse (6) enthält:

i) Messmittel (7-9) für Wasserparameter, einen Temperatursensor (7), einen pH-Sensor (8) und einen Redoxpotentialsensor (9) umfassend, und
ii) Mittel zum Einführen (10, 11) von Korrekturmitteln in den Filtrationskreislauf (3), und

D) eine Steuereinheit (12), an das Gehäuse (6) angeschlossen und in der Lage, einen Filtrationsplan aufzustellen, die Filtrationspumpe (4) entsprechend dem Filtrationsplan zu steuern, Mengen und Einführzeitpunkte der Korrekturmittel in Abhängigkeit von den im Gehäuse (6) gemessenen Wasserparametern zu planen und die Einführmittel (10, 11) entsprechend der bestimmten Mengen und Einführplanung zu steuern, **dadurch gekennzeichnet, dass** die Steuereinheit (12) in der Lage ist, das Verfahren nach irgendeinem der vorangehenden Patentansprüche auszuführen.

6. Schwimmbad (2), **dadurch gekennzeichnet, dass** es eine Vorrichtung (1) nach dem vorangehenden Patentanspruch aufweist.

**Claims**

1. A method of controlling a water treatment device (1) for a swimming pool (2), comprising:

A) at least one filtration circuit (3) equipped with at least one filter (5);
B) at least one filtration pump (4) adapted to effect circulation of the water in said at least one filtration circuit (3) through said at least one filter (5);
C) a single hydraulically connected measurement and correction unit (6) hydraulically connected, preferably in series, to said at least one filtration circuit (3), the unit (6) comprising:

i) measuring means for (7-9) water parameters; and
ii) injection means for corrective products (10, 11) into the filtration circuit (3) for; and

D) a control unit (12) interfaced with the unit (6), adapted to determine a filtration schedule, to control the filtration pump (4) according to the filtration schedule, to determine the amounts and schedules for injecting the corrective products based on the water parameters measured within the box (6), and to control the means for injecting (10, 11) according to the quantities and schedules determined,
Wherein the method comprises the following steps:

- measuring water parameters, including the water temperature, the water pH, and the water redox potential by means of measurement sensors (7-9) within the unit (6) comprising a temperature sensor (7), a pH sensor (8), and a redox potential sensor (9),
- determining the amounts and injection schedules of corrective products,
- controlling the injection means (10, 11) according to the determined amounts and schedules,
- repeating all of the steps over a first period, preferably hourly,

**characterized in that** the method further comprises the steps of:

- determining a theoretical filtration time TTF in hours over a second period, preferably daily, according to the formula

$$TTF = \max\ (\text{measured } T°\text{-}12,\ \text{measured } T°/2),$$

where measured T° is the measured water temperature in degrees Celsius,
- determining a corrected pH as a function of a measured pH and the measured temperature according to the formula :

corrected pH = measured pH -(measured pH -7) $\times$ (measured T° -25) $\times$ PH_TEMP

where corrected pH is the corrected pH of the water, measured pH is the measured pH of the water, measured T° is the measured water temperature in degrees Celsius, and PH_TEMP is a conversion constant equal to 0.03,

- determining an amount of pH corrector to be injected as a function of the difference between the corrected pH and a setpoint pH,
- determining a corrected redox potential as a function of a measured redox potential and the corrected pH according to the formula:

Corrected Redox = measured Redox - (ORP_PH_A × Corrected pH + ORP_PH_B)), where Corrected Redox corresponds to the corrected redox potential, measured Redox corresponds to the redox potential measured by means of the redox potential sensor 9, Corrected pH corresponds to the corrected pH, ORP_PH_A corresponds to a constant whose value is -76, and ORP_PH_B corresponds to another constant, whose value is 532,

- determining an amount of disinfectant to be injected as a function of the difference between the corrected redox potential and a redox potential setpoint,
- constructing a filtration schedule by distributing the theoretical filtration time over the second period,
- constructing a pH correction schedule by distributing the determined amount of pH corrector over the second period,
- constructing a disinfection schedule by distributing the determined amount of disinfectant over the second period,
- controlling the filtration pump (4) according to the filtration schedule,
- injecting the pH corrector according to the pH correction schedule; and
- injecting the disinfectant according to the disinfection schedule.

2. The method according to the previous claim, wherein the pH correction schedule and the disinfection schedule are disjoint, with a safety interval between two injections of different correctors, which safety interval is preferably of at least 10 min.

3. The method according to any one of the preceding claims, wherein :

a) the corrective products include at least one pH corrector, which may be an acidifying agent and/or an alkalising agent, and a disinfectant; and
b) the injection means (10, 11) include:

i) a first metering pump (10) adapted to meter and inject said at least one pH corrector; and
ii) a second metering pump (11) adapted to meter and inject the disinfectant or a production means (11) adapted to produce and inject the disinfectant.

4. The method according to claim 3, wherein the injection means (10, 11) comprise:

i. a first metering pump (10) adapted to meter and inject said at least one pH corrector; and
ii. an electrolyzer (11) adapted to produce chlorine from the salt dissolved in the swimming pool water and to inject it at the unit (6) into the filtration circuit.

5. A water treatment device (1) for a swimming pool (2), comprising:

A) at least one filtration circuit (3) equipped with at least one filter (5),
B) at least one filtration pump (4) adapted to effect circulation of the water in said at least one filtration circuit (3) through said at least one filter (5),
C) a single hydraulically connected measurement and correction unit (6), preferably in series, to said at least one filtration circuit (3), which unit (6) comprises:

i) measuring means for (7-9) water parameters, comprising a temperature sensor (7), a pH sensor (8) and a redox potential sensor (9); and
ii) injective means (10, 11) for corrective products into the filtration circuit (3); and

D) a control unit (12) interfaced with the unit (6), adapted to determine a filtration schedule, to control the filtration pump (4) according to the filtration schedule, to determine the amounts and schedules for injecting the corrective products as a function of the water parameters measured within the unit (6), and to control the injection means (10, 11) according to the determined amounts and schedules, ***characterized in that*** the control unit (12) is adapted to implement the method according to any one of the above claims.

6. A swimming pool (2) ***characterized in that*** it comprises a device (1) according to previous claim. |

Figure 1

Figure 2

Figure 3

**EP 4 144 704 B1**

## RÉFÉRENCES CITÉES DANS LA DESCRIPTION

**Documents brevets cités dans la description**

- US 2020369534 A1